Europäisches Patentamt

(19) European Patent Office

Office européen des brevets

(11) EP 0 543 751 B1

(12) FASCICULE DE BREVET EUROPEEN

(45) Date de publication et mention de la délivrance du brevet:
02.10.1996 Bulletin 1996/40

(51) Int. Cl.⁶: C01B 31/30, C01B 31/34, C01B 31/36

(21) Numéro de dépôt: 92420428.2

(22) Date de dépôt: 19.11.1992

(54) **Procédé de fabrication de carbures métalliques à grande surface spécifique sous balayage de gaz inerte à pression atmosphérique**

Verfahren zur Herstellung von metallischen Karbiden mit hoher spezifischer Oberfläche unter Inertgasstrom bei Atmosphärendruck

Process for preparing metallic carbides of high specific surface unter flowing inert gas at atmospheric pressure

(84) Etats contractants désignés:
BE DE DK ES FR GB IT NL SE

(30) Priorité: 21.11.1991 FR 9114606

(43) Date de publication de la demande:
26.05.1993 Bulletin 1993/21

(73) Titulaire: PECHINEY RECHERCHE (Groupement d'Intérêt Economique régi par l'Ordonnance du 23 Septembre 1967)
92400 Courbevoie la Défense 5 (FR)

(72) Inventeurs:
• Grindatto, Bernard
  F-38680 Pont en Royans (FR)
• Jourdan, Alex
  F-38500 Voiron (FR)
• Prin, Marie
  F-38340 Moirans (FR)

(74) Mandataire: Mougeot, Jean-Claude et al
PECHINEY
28, rue de Bonnel
69433 Lyon Cedex 03 (FR)

(56) Documents cités:
EP-A- 0 000 661        EP-A- 0 286 294
EP-A- 0 313 480        EP-A- 0 396 475
US-A- 4 529 575

• JOURNAL OF THE AMERICAN CERAMIC SOCIETY vol. 66, no. 7, Juillet 1983, COLUMBUS, OHIO pages C111 - C113 GEORGE CHIA-TSING WEI 'Beta SIC powders produced by carbothermic reduction of silica in a high-temperature rotary furnace'
• PATENT ABSTRACTS OF JAPAN vol. 14, no. 34 (C-679)23 Janvier 1990 & JP-A-12 70 507, 27 Octobre 1989
• PATENT ABSTRACTS OF JAPAN vol. 10, no. 245 (C-368)(2301) 22 Août 1986 & JP-A-61 074 635, 16 Avril 1986
• PATENT ABSTRACTS OF JAPAN vol. 26, no. 186 (C-126)22 Septembre 1982 & JP-A-57 101 000, 23 Juin 1982
• PATENT ABSTRACTS OF JAPAN vol. 7, no. 066 (C-157)18 Mars 1983 & JP-A-58 002 211, 7 Janvier 1983

**Description**

DOMAINE TECHNIQUE DE L'INVENTION.

L'invention concerne le domaine technique des carbures de métaux lourds à grande surface spécifique destinés à servir de catalyseurs ou de supports de catalyseurs pour l'industrie chimique ou pétrochimique ou pour les pots d'échappement.

PROBLEME POSE.

Les demandes de brevet français n° 2 621 904 et 2 645 143 décrivent un procédé de préparation de carbures de silicium et de carbures de métaux lourds à grande surface spécifique qui consiste à faire réagir sous vide un composé du silicium ou du métal lourd, à une température telle que ce composé soit gazeux, sur du carbone ayant une grande surface spécifique, par exemple du charbon actif. Le carbure obtenu conserve la mémoire de la surface spécifique du carbone de départ et présente une surface spécifique nettement supérieure à celle des carbures métalliques de l'art antérieur, bien que plus faible que celle du carbone de départ.

Les inventeurs se sont posé le problème d'améliorer le procédé de fabrication de ces carbures, d'une part, en s'affranchissant de l'usage du vide, et d'autre part, en rendant le procédé continu, ces améliorations ayant pour but d'augmenter la productivité et de diminuer les coûts.

DESCRIPTION DE L'ART ANTERIEUR.

La demande de brevet français n° 2 645 143 citée ci-dessus décrit le principe de préparation des carbures métalliques à grande surface spécifique ainsi que des exemples de mise en oeuvre. On mélange le carbone à grande surface spécifique, par exemple du charbon actif avec un composé, volatil à la température de réaction, du métal dont on veut obtenir le carbure. Le mélange placé dans un creuset est porté à une température comprise entre 900 et 1400°C sous un vide inférieur à 13 hPa pendant une durée comprise entre 1 et 7 heures mais le plus souvent d'au moins 4 heures. En variante, il est également possible de générer le composé volatil du métal dans une première zone et d'opérer la réduction et la carburation dans une deuxième zone, les températures des deux zones pouvant être différentes. Dans le cas particulier de la préparation du carbure de silicium, décrite dans la demande de brevet français 2 621 904, le composé volatil du silicium est l'oxyde SiO généré par réduction de la silice par le silicium.

Le demande de brevet européen EP 0 272 377 (VEREINIGTE ALUMINIUM WERKE) décrit la fabrication continue de carbures ou de nitrures de bore, d'aluminium, de silicium ainsi que de carbures, de nitrures ou de borures de métaux des groupes IV, V, et VI ( Ti, Zr, V, Nb, Ta, Cr, Mo, W ) par carboréduction des oxydes dans des creusets en graphite circulant dans un four vertical. Un train de creusets successifs traverse verticalement le four de bas en haut.Le chauffage des creusets se fait par effet Joule à l'aide d'un courant électrique traversant le train de creusets et amené par un lit de carbone en grains entourant le train de creusets et circulant de haut en bas. Une circulation de gaz neutre ou d'azote peut être faite à l'intérieur de la charge contenue dans les creusets. La température indiquée dans la description varie, selon les produits, de 1500 à 3000°C, et, dans les exemples, de 1700 à 3300°C.

Le brevet US 4 008 090 (MIYAKE) décrit la fabrication de carbure de W mélangé ou non à des carbures de Ti, Ta, Nb par les étapes suivantes:

- mélanger l'oxyde de W additionné ou non d'oxydes de Ti, Ta, Nb avec de la poudre de carbone en quantité suffisante pour atteindre la quantité théorique de carbone combiné et en faire des boulettes,

- chauffer ces boulettes dans un four tournant à 1000 à 1600°C dans une atmosphère d'azote ou d'argon pour réduire la teneur en oxygène à < 5 %,

- chauffer enfin ces boulettes dans un four tournant à 1400 à 2000°C dans une atmosphère d'hydrogène.

Le brevet US 4 529 575 (RYO ENOMOTO et al) décrit un procédé de fabrication continue de carbure de silicium ultrafin consistant à:

- préparer un mélange de poudre de silice, de poudre de carbone ayant une surface de 1 à 1000 m2/g et d'un liant organique pour en faire des granulés,

- charger ces granulés en haut d'un réacteur continu dans lequel ils traversent par gravité successivement une zone de préchauffage, une zone de chauffage (1500 à 2000°C) où se forme le SiC et une zone de refroidissement sous atmosphère non-oxydante à la sortie de laquelle le SiC formé est déchargé.

L'article du "Journal of the American Ceramic Society", vol 66, n° 7, juillet 1983, intitulé "Beta SiC powders produced by carbothermic reduction of silica in a high temperature rotary furnace" de George Chia-Tsing WEI décrit la fabrication de carbure de silicium par réduction de $SiO_2$ par le carbone dans un four rotatif sous un balayage d'argon.

Aucun de ces documents cependant ne décrit la combinaison de moyens exposée ci-après permettant la production de carbures à grande surface spécifique à partir de carbone à grande surface spécifique et de composé métallique volatil par un procédé sous balayage de gaz inerte à pression atmosphérique.

## DESCRIPTION DE L'INVENTION.

**Principe**

L'utilisation du vide dans le procédé de la demande de brevet français n° 2 645 143 se justifie par la raison suivante: La réaction de réduction, puis de carburation des oxydes métalliques se fait avec dégagement de monoxyde de carbone. Par exemple, avec l'oxyde de molybdène $MoO_3$, les réactions successives sont les suivantes:

$$MoO_3 + C = MoO_2 + CO$$

$$2MoO_2 + 5C = Mo_2C + 4CO \quad \text{ou, globalement:}$$

$$\overline{\phantom{2MoO_2 + 5C = Mo_2C + 4CO}}$$

$$2MoO_3 + 7C = Mo_2C + 6CO$$

On constate que pour chaque mole de $Mo_2C$ produite, il faut éliminer 6 moles de CO, c'est-à-dire environ 135 litres de CO pour 203 g de $Mo_2C$ produit.

Le rôle du vide est d'éliminer le CO au fur et à mesure qu'il se forme, ce qui déplace l'équilibre des réactions ci-dessus vers la formation du carbure.

L'utilisation du vide, bien que répandue dans l'industrie, reste cependant une technique délicate et coûteuse. Elle complique en outre le passage d'un procédé discontinu à un procédé continu.

La présente invention qui vise à s'affranchir de l'utilisation du vide, résulte de la combinaison des étapes suivantes:

- mettre en contact dans un réacteur un mélange réactif constitué d'une part du carbone dont la surface spécifique est au moins égale à 200 $m^2/g$, d'autre part d'un composé, volatil dans les conditions de la réaction, du métal dont on fabrique le carbure, dans des proportions voisines de la stoechiométrie;

- balayer ce mélange réactif par un courant de gaz inerte;

- porter le mélange réactif toujours sous balayage de gaz inerte à une température comprise entre 900 et 1400°C pendant un temps suffisant pour réduire le composé métallique volatil par le carbone et finalement carburer le produit réduit;

- refroidir le carbure obtenu, toujours en présence de gaz inerte, jusqu'à une température telle qu'il ne s'oxyde plus au contact de l'air;

- extraire le carbure du réacteur.

Ce procédé, discontinu, peut être rendu continu par la variante suivante:

- introduire dans un réacteur continu un mélange réactif constitué d'une part du carbone dont la surface spécifique est au moins égale à 200 $m^2/g$, d'autre part un composé, volatil dans les conditions de la réaction, du métal dont on fabrique le carbure, dans des proportions voisines de la stoechiométrie;

- balayer le réacteur par un courant de gaz inerte introduit du côté de l'entrée du mélange réactif et extrait du côté de la sortie du carbure obtenu;

- faire passer le mélange réactif dans une première zone chauffée à une température comprise entre 900 et 1400°C pendant un temps suffisant pour volatiliser le composé métallique, le réduire et finalement le carburer au contact du carbone;

- faire passer le mélange réactif dans une deuxième zone où le carbure obtenu, toujours en présence de gaz inerte, est refroidi jusqu'à une température telle qu'il ne s'oxyde plus au contact de l'air;

- extraire le carbure du réacteur.

**Mélange réactif**

Le mélange réactif est constitué de carbone et d'un composé, volatil à la température de réaction, du métal dont on veut préparer le carbure.

Le carbone doit avoir une grande surface spécifique, supérieure à 200 $m^2$/g, mesurée par la méthode BET. Le charbon actif dont la surface spécifique peut atteindre 2000 $m^2$/g constitue le matériau de choix, mais toutes les variétés de carbone, ayant subi un traitement d'activation pour augmenter leur surface, conviennent également. L'efficacité du carbone qu'il soit sous forme de charbon actif ou de carbone activé peut encore être accrue par deux traitements prélables à sa réaction avec le composé métallique volatil:

- par imprégnation dans une solution de sels de Ce, U, Ti, Zr, Hf, lanthanides, séchage et décomposition thermique ainsi que cela est indiqué dans la demande FR 2 645 143.
- par un traitement de dégazage sous vide, dont l'intérêt est expliqué plus loin, à des températures comprises entre 1000 et 1200°C pendant des durées de 0,5 à 2 heures.

Enfin, le carbone peut être sous forme pulvérulente ou sous forme agglomérée, granulés, boulettes, obtenus selon tout procédé connu.

Les métaux dont on veut obtenir le carbure par le procédé de l'invention sont en particulier le silicium, les métaux de transition, (groupes 3b, 4b, 5b, 6b, 7b, 8 des séries 4, 5, 6 de la classification des éléments), les métaux des terres rares et les actinides.

Ils doivent avoir, en outre, au moins un composé volatil dans les conditions de température de la réaction. Parmi ces composés, on choisit de préférence les oxydes ou les iodures, mais d'autres composés peuvent aussi convenir tels les chlorures, fluorures ou des composés organométalliques sublimables. Parmi les métaux présentant ces caractéristiques et dont les carbures ont un interêt catalytique, on peut citer Mo, W, Re, V, Nb, Ta, Ti, Cr, Ni.

Comme le carbone, le composé métallique peut être sous forme de poudre plus ou moins fine, ou sous forme agglomérée, granulés ou boulettes par exemple. Il est aussi possible de mélanger le carbone et le composé métallique sous forme de poudre et d'en faire des agglomérés.

Dans le cas du silicium, si l'on utilise comme composé volatil le sous-oxyde SiO, ce sous-oxyde instable doit être préparé dans le réacteur lui-même, au moment de sa réaction avec le carbone. Mais, afin d'éviter des réactions parasites, il est important que la réduction de la silice par le silicium se fasse en dehors de la présence de carbone et en dehors du balayage direct par le gaz inerte, ce balayage servant surtout à éliminer le CO produit dans la réaction de carburation.

**Conditions de la réaction**

La demanderesse a découvert que la teneur en CO à la sortie du réacteur constituait un moyen de piloter son fonctionnement pour assurer un rendement optimal et constant et une bonne qualité des produits.

Les réactions de réduction et de carburation produisent du CO qui est entrainé par le gaz inerte, ce qui favorise l'évolution de la réaction vers la formation du carbure. Les inventeurs ont découvert le rôle important de la pression partielle de CO dans le gaz inerte. Si cette pression devient trop élevée, elle a deux effets nocifs:

- elle peut localement, en fonction de la température donner lieu à une rétrogradation de la réaction de carburation, le CO réagissant sur le carbure formé pour redonner de l'oxyde et du carbone, ce qui diminue d'autant le rendement du réacteur;

Par exemple, la réaction de formation de carbure de silicium est la suivante:

$$SiO + 2C = SiC + CO \qquad (1)$$

Cette réaction représente un équilibre entre les quatre constituants présents, dont trois sont indépendants. Le système est donc bivariant. Mais la pression de SiO, $P_{SiO}$ est fixée parla réaction SiO2 + Si = 2SiO et ne dépend que de la température. Le système devient alors monovariant et la pression partielle $P_{CO}$ est, elle aussi, fonction uniquement de la température.

Le tableau 1 ci-dessous indique cette pression partielle de CO en fonction de la température.

TABLEAU 1

| Température (°C) | $P_{CO}$ (hPa) |
|---|---|
| 1230 | 266 |
| 1250 | 376 |
| 1280 | 526 |

Donc, si à une température de 1250°C par exemple, la pression partielle de CO dépasse 376 hPa, la réaction (1) se fera dans le sens:

$$SiC + CO = SiO + 2C$$

le SiO formé réagissant ensuite selon:

$$SiO + CO = SiO_2 + C \qquad\qquad (2)$$

- elle peut donner lieu à l'oxydation de l'oxyde volatil pour former un oxyde moins volatil en générant des fines de carbone. C'est le cas, en particulier, de l'oxyde de silicium SiO qui réagit sur le CO pour redonner de la silice et du carbone selon la réaction (2) ci-dessus. Ce dépôt de carbone sur la source de SiO (mélange de Si et de SiO2) pollue ce mélange et donne naissance à du carbure qui n'a évidemment pas les caractéristiques, notamment de surface spécifique de celui obtenu par "filiation" à partir de carbone solide introduit comme matière première.

La réaction (2) représente un équilibre entre les quatre constituants présents, dont trois sont indépendants. Le système est donc bivariant. Mais, comme indiqué plus haut, la pression de SiO, $P_{SiO}$ est fixée par la réaction

$$SiO2 + Si = 2SiO$$

et ne dépend que de la température. Le système devient alors monovariant et la pression partielle $P_{CO}$ est, elle aussi, fonction uniquement de la température.

Le tableau 2 ci-dessous indique cette pression partielle de CO en fonction de la température.

TABLEAU 2

| Température (°C) | $P_{CO}$ (hPa) |
|---|---|
| 1230 | 1,8 |
| 1250 | 2,7 |
| 1280 | 4,2 |

Donc, si à une température de 1250°C par exemple, la pression partielle de CO dépasse 2,7 hPa, la réaction (2) se fera dans le sens:

$$SiO + CO = SiO_2 + 2C$$

Le contrôle de la teneur en CO à la sortie du réacteur est donc primordial pour assurer un rendement optimal et constant et une bonne qualité des produits, en particulier un très faible taux d'oxyde n'ayant pas réagi.

Cette découverte a conduit les inventeurs à introduire dans leur mode opératoire deux moyens supplémentaires: le dégazage préalable du charbon actif et le pilotage de la réaction par la pression partielle de CO.

1°) Dégazage préalable du charbon actif.

La demanderesse a montré au cours de ses recherches que la totalité de l'oxyde de carbone présent dans le gaz de balayage ne provient pas uniquement des réactions de réduction et de carburation, mais également du charbon actif lui-même. Ce charbon actif, élaboré à une température inférieure à celles des réactions mises en jeu dans le présent procédé, contient en surface des espèces chimiques telles des lactones, produits organiques de type éthers comprenant par conséquent des atomes d'hydrogène et d'oxygène. Ces produits organiques, lorsqu'ils sont portés à la température de carburation se décomposent en donnant naissance à des dégagements de CO et de $H_2O$, néfastes aux réactions de carburation.

L'un des moyens de l'invention consiste donc à procéder à un dégazage préalable du charbon actif avant de le mettre en contact avec le composé volatil du métal dont on veut obtenir le carbure. Ce dégazage se fait sous un vide primaire ou sous balayage d'un gaz inerte tel l'argon, à une température et pendant une durée telles que, le charbon actif placé ensuite à une température et dans un débit de gaz inerte identiques à celle de la réaction de carburation, la pression partielle de CO n'excède pas, dans le cas de la carburation du silicium 2 hPa. Cette pression partielle correspond en effet sensiblement à la pression au-delà de laquelle, d'après le tableau 2, la réaction (2) se produit dans le sens de la formation de $SiO_2$.

Pratiquement, le dégazage recommandé se fait à des températures comprises entre 1000 et 1200°C pendant des durées de 0,5 à 2 heures.

2°) Pilotage de la réaction par la pression partielle de CO.

Pour permettre ce pilotage, le procédé comporte une boucle de régulation comprenant la mesure en continu ou à intervalles réguliers de la teneur en CO du gaz inerte à la sortie du réacteur, la comparaison avec un intervalle de consigne et une modification des paramètres opératoires pour ramener la teneur en CO à l'intérieur de cet intervalle. On agit de préférence sur le débit de gaz inerte que l'on augmente si la teneur en CO augmente. A cet effet, une addition de gaz inerte est déclenchée si la teneur en CO dépasse un certain seuil fixé, par exemple à 2 hPa. Au contraire, lorsque la pression de CO devient inférieure à un autre seuil, par exemple 0,05 hPa, ce débit additionnel de gaz inerte est supprimé. Il est aussi possible de faire varier la température de réaction que l'on diminue ou augmente suivant que la teneur en CO augmente ou diminue, mais cela est plus difficilement applicable car les variations de températures présentent plus d'inertie que les variations de débit.

Le procédé, incluant le pilotage du réacteur par la teneur en CO, est alors caractérisé par les étapes suivantes:

- introduire dans un réacteur continu un mélange réactif constitué d'une part du carbone dont la surface spécifique est au moins égale à 200 $m^2$/g, et préalablement dégazé, d'autre part un composé, volatil dans les conditions de la réaction, du métal dont on fabrique le carbure,dans des proportions voisines de la stoechiométrie;

- balayer le réacteur par un courant de gaz inerte introduit du côté de l'entrée du mélange réactif et extrait du côté de la sortie du carbure obtenu;

- faire passer le mélange réactif dans une première zone chauffée à une température comprise entre 900 et 1400°C pendant un temps suffisant pour volatiliser le composé métallique, le réduire par le carbone et finalement carburer le produit réduit;

- faire passer le mélange réactif dans une deuxième zone où le carbure obtenu, toujours en présence de gaz inerte, est refroidi jusqu'à une température telle qu'il ne s'oxyde plus au contact de l'air;

- extraire le carbure du réacteur.

et par le fait que l'on mesure en continu ou à intervalles réguliers la teneur en CO du gaz inerte à la sortie du réacteur, que l'on compare cette valeur à un intervalle de consigne et que l'on modifie les paramètres opératoires pour ramener la teneur en CO à l'intérieur de cet intervalle en agissant sur le débit de gaz inerte que l'on augmente si la teneur en CO augmente et que l'on diminue si la teneur en CO diminue ou sur la température de réaction.

**Produits obtenus**

Les produits obtenus se caractérisent:

- par leur composition: ils contiennent de 0 à 30 % de carbone résiduel et moins de 1 % de métal ou d'oxyde résiduel;
- par leur structure: la taille des cristallites de carbure est comprise entre 50 et $400.10^{-10}$ m;
- par leur surface BET comprise entre 10 et 200 $m^2$/g et enfin;
- par leur texture poreuse définie par filiation à partir de celle du charbon actif d'origine. Le grain de charbon actif présente trois types de porosité: une macroporosité entre nodules de diamètre moyen 2-5 $\mu$m, une mésoporosité entre particules de diamètre moyen 30-50 angströms et une microporosité à l'intérieur des particules de diamètre moyen 5-15 angströms. Les carbures et, en partiulier le carbure de silicium se définissent par rapport au charbon de départ par la conservation de la macroporosité, la multiplication par un facteur approximatif de 3 de la taille moyenne des mésopores qui passe à 90-150 angströms et la disparition à peu près complète de la microporosité.

Cette filiation de la texture poreuse est d'un grand intérêt pratique puisqu'elle permet de fabriquer du carbure de mésoporosité contrôlée par choix d'un charbon actif de texture poreuse appropriée.

DESCRIPTION DES FIGURES.

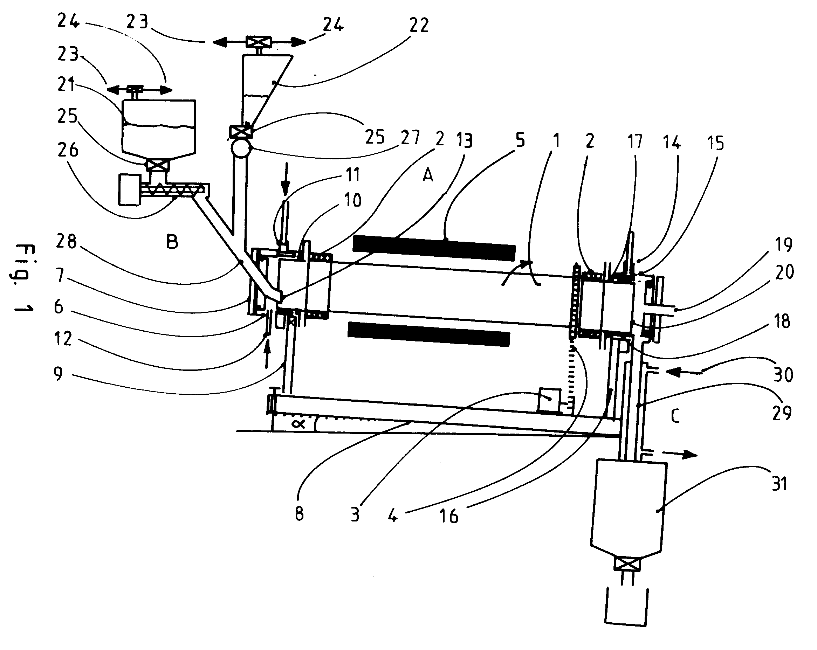

Le procédé de l'invention, caractérisé par le balayage du réacteur par un gaz neutre sous pression atmosphérique, est représenté schématiquement dans son dispositif préférentiel de mise en oeuvre, un four tournant fonctionnant en continu, sur la figure 1.

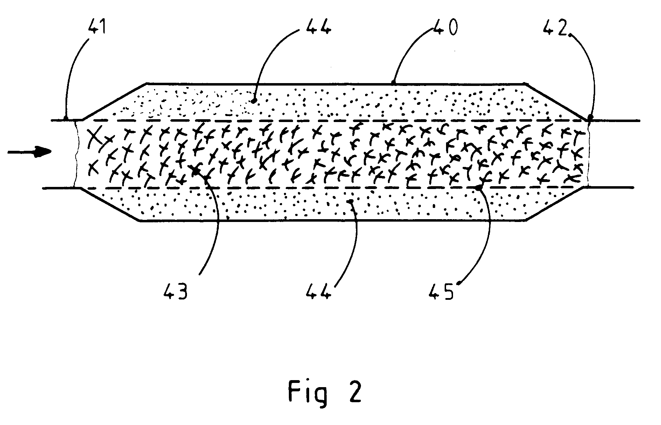

Le procédé de l'invention, appliqué au cas particulier de la fabrication du carbure de silicium en discontinu est représenté schématiquement sur la figure 2.

Sur la figure 1,le four comprend trois parties essentielles:

- la partie chauffante ou four proprement dit (A) et les dispositifs annexes de rotation, de chauffage, d'entrée et de sortie du four;

- la partie amont d'admission des matières premières, (B);

- la partie aval d'extraction des produits finis,(C);

Le four proprement dit (A) est constitué d'un tube (1) en réfractaire non réductible par le carbone dans les conditions opératoires ( température < 1400°C). On choisira de préférence l'alumine. L'axe du tube est incliné sur l'horizontale d'un angle que l'on peut faire varier par un dispositif mécanique non représenté. A chacune de ses extrêmités, le tube est supporté par un palier (2) tel que cela est représenté sur la figure ou bien repose sur des galets d'axes parallèles à celui du tube. Un groupe moto-variateur (3) permet, par un système de poulies et de courroie ou de roues dentées et de chaîne (4) de mettre en rotation le four à une vitesse que l'on peut faire varier.

Le chauffage est assuré par une enveloppe (5) munie de résistances électriques et entourant le tube dans sa zone centrale.

L'entrée du four (6) est constituée d'une boîte étanche (7) fixée sur le bâti du four (8) par un support (9). L'extrêmité amont du four tourne à l'intérieur de cette boîte à laquelle elle est reliée par un joint tournant (10). La boîte est refroidie à l'aide d'une chambre annulaire à circulation d'eau (11). Elle est munie d'une tubulure (12) par laquelle on peut faire le vide ou envoyer un gaz de balayage. Enfin, la goulotte d'alimentation en matières premières (28) la traverse et vient déboucher en tête du four (13).

La sortie du four (14) est constituée aussi d'une boîte étanche (15) fixée sur le bâti du four (8) par un support (16). L'extrêmité aval du four tourne à l'intérieur de cette boîte à laquelle elle est reliée par un joint tournant (17). La boîte est refroidie à l'aide d'une chambre annulaire à circulation d'eau (18). Elle est munie d'une tubulure (19) par laquelle on peut faire le vide ou évacuer un gaz de balayage. Enfin, la goulotte d'extraction des produits finis (29) la traverse et vient déboucher à l'extrêmité du four (20).

La partie amont d'admission des matières premières, (B) comprend: une trémie (21) pour l'alimentation en carbone et une trémie (22) pour l'alimentation en oxyde métallique. Chacune de ces trémies étanches est munie à sa partie supérieure d'une vanne à trois voies pouvant la faire communiquer soit avec une pompe à vide (23) soit avec une source de gaz inerte (24). A la base de chacune de ces trémies se trouve un système d'obturation (25) et un système de distribution et de dosage. On a représenté une vis sans fin (26) sous la trémie à carbone et un distributeur rotatif à palettes (27) sous la trémie à oxyde métallique. Les deux alimentations se rejoignent dans la goulotte d'alimentation en matières premières (28).

La partie aval d'extraction des produits finis, (C), comprend une goulotte d'extraction (29),refroidie par une circulation d'eau (30), qui débouche dans une trémie étanche (31) munie à sa partie inférieure d'une vanne pour l'extraction du carbure. L'ensemble est placé également sous gaz inerte.

Le four fonctionne de la façon suivante:

Il est d'abord mis en rotation et chauffé à la température de réaction convenant aux produits traités, sous balayage d'un gaz inerte tel l'argon. Pour accélérer la mise sous atmosphère inerte, il est possible de faire, au préalable, le vide dans l'ensemble de l'installation. Lorsque la température de réaction est atteinte, on introduit les matières premières par la partie amont d'admission des matières premières, (B). Le dosage des matières premières est réalisé par les distributeurs-doseurs (26) et (27). Ces matières premières, en raison de la rotation du four et de son inclinaison sur l'horizontale, cheminent de la partie supérieure du four vers sa partie inférieure en se réduisant et se carburant progressivement. La réaction doit être complète au moment où les produits pénètrent dans la partie aval d'extraction des produits finis, (C). Dans cette partie, le carbure formé se refroidit sous gaz inerte et est extrait par l'intermédiaire de la trémie (31).

Le temps de séjour dans la partie chauffée du four se règle de façon classique par la longueur du four, son angle d'inclinaison sur l'horizontale et sa vitesse de rotation.

Les inventeurs ont constaté, de façon inattendue, que les temps de réaction sont fortement raccourcis par rapport à la durée de la réaction dans le procédé discontinu sous vide: de 2 à 4 heures au lieu de 4 à 7 heures environ. Cela tient sans doute au brassage énergique des matières premières qui assure un bon contact entre le carbone et le composé métallique gazeux.

Le four tournant est le dispositif préféré en raison de sa double fonction : transport du produit et brassage permanent des matières premières de la réaction.

Mais la protection du présent brevet ne se limite pas à ce dispositif qui n'est décrit que comme un exemple de réaction en continu sous pression atmosphérique. D'autres types de réacteurs peuvent, en effet, être utilisés: fours à passage, dans lesquels les produits disposés sur une bande ou une chaine continue ou dans des conteneurs successifs traversent le four balayé par un courant de gaz neutre, réacteurs en lit fluidisé, dans lesquels le gaz de fluidisation est le gaz neutre, fours croulants dans lesquels les produits, chargés à la partie supérieure du four, s'écoulent sous leur propre poids en traversant successivement une première zone de chauffage et une deuxième zone de refroidissement.

Un cas particulier important demande un développement spécial: c'est celui des carbures pour lesquels il existe un oxyde ou un oxyde dopé par exemple par des alcalins, en particulier sodium et potassium, qui se subliment suffisamment rapidement à des températures comprises entre 800 et 1400°C. C'est le cas du carbure de molybdène, dont l'oxyde correspondant $MoO_3$ est volatil; c'est également le cas du carbure de tungstène dont l'oxyde forme, avec la soude, un sel $(WO_3)_x(NaOH)_{1-x}$ également volatil. La carburation se fait en deux étapes que les conditions de température et surtout la cinétique permettent de séparer parfaitement: d'abord la réduction de l'oxyde ou de l'oxyde dopé gazeux en sous-oxyde et/ou en métal déposé sur le carbone; ensuite la réduction complète en métal et la carburation. La première réaction, gaz-solide est rapide, particulièrement dans le cas de l'oxyde de molybdène et, demandant ainsi des temps de séjour faibles, elle peut se faire dans un four tournant de petites dimensions. Le produit intermédiaire, constitué d'un dépôt de sous-oxyde sur le carbone, est parfaitement stable; il peut être remis à l'air, stocké, sans inconvénient. La deuxième réaction, qui a lieu par diffusion solide-solide, est lente et requiert de plus longs temps de séjour et donc un four tournant de plus grandes dimensions. Un tel procédé, sera décrit plus loin à titre d'exemple particulier de la mise en oeuvre de l'invention.

Sur la figure 2, on a représenté un réacteur discontinu pour la fabrication de carbure de silicium. Cette figure peut être considérée aussi bien comme la section d'un réacteur cylindrique que comme la vue de dessus d'une nacelle plane. Le réacteur comporte une enveloppe extérieure (40), en matériau réfractaire stable dans les conditions opératoires. Cette enveloppe extérieure présente, à l'entrée (41) et à la sortie (42) des réductions de section. Elle est remplie dans sa partie centrale (43) de carbone à grande surface spécifique, du charbon actif par exemple et dans sa partie latérale (44) d'un mélange de silice et de silicium. Une cloison réfractaire poreuse (45) peut éventuellement séparer les deux réactifs, mais cela n'est pas indispensable. Un gaz inerte, de l'argon, par exemple, est introduit par l'entrée (41) et balaie en permanence le réacteur, la majeure partie traversant uniquement le carbone, en raison de la perte de charge du lit de silice-silicium et aussi de la cloison poreuse si elle existe. L'ensemble est alors porté à une température comprise entre 900 et 1400°C. A cette température, le silicium réduit la silice en donnant du SiO en dehors de la présence de carbone et pratiquement hors du courant de balayage. Le SiO est alors réduit et carburé au contact du carbone tandis que l'oxyde de carbone formé est éliminé par le courant d'argon circulant dans le lit de carbone.

EXEMPLES.

Les deux premiers exemples développés ci-après ont été réalisés dans un four tournant du type conforme à la description ci-dessus. Le four a une longueur de 0,75 mètres, son angle d'inclinaison sur l'horizontale peut varier de 1 à 3°, sa vitesse de rotation de 0,05 à 0,2 tours/min.

Exemple 1: Fabrication de carbure de molybdène en deux étapes.

Cet exemple illustre la fabrication de carbure de molybdène à partir d'un oxyde aisément sublimable, $MoO_3$.

Du charbon actif a été tout d'abord dégazé sous vide pendant 1 heure à une température de 1100°C. Dans une première étape, l'oxyde mélangé au charbon actif est sublimé et se dépose sur le charbon actif qui le réduit partiellement en sous-oxyde $MoO_2$. Pour réaliser cette première étape, le four est réglé à 800°C, son angle d'inclinaison et sa vitesse de rotation sont réglés de telle sorte que le temps de séjour des produits dans le four soit de 1 heure. Le four est mis sous balayage d'argon à un débit de 50 litres/heure. Les poudres de $MoO_3$ pur et de charbon actif mélangées dans des proportions stoechiométriques sont introduites en continu dans le four. On recueille à la sortie, après refroidissement, une poudre homogène et parfaitement stable constituée de charbon actif recouvert de sous-oxyde $MoO_2$

Dans la deuxième étape, le produit intermédiaire composé de $MoO_2$ et de charbon actif est réduit complètement et carburé. Pour réaliser cette deuxième étape, le four est réglé à 1300°C, son angle d'inclinaison et sa vitesse de rotation sont réglés de telle sorte que le temps de séjour du produit dans le four soit de 2 heures. Le four est mis sous balayage d'argon à un débit de 50 litres/heure. Le produit intermédiaire composé de $MoO_2$ et de charbon actif est introduit en continu dans le four. On recueille à la sortie, après refroidissement, environ 100 g/h d'une poudre composée de 85 % de carbure de molybdène $Mo_2C$ et de 15 % de charbon actif n'ayant pas réagi. Se teneur en molybdène métal est inférieure à 0,1 %.

Cette poudre a une surface BET de 150 $m^2$/g et la dimension moyenne des cristallites est de 340 angströms= $340.10^{-10}$ m.

Exemple 2: Fabrication de carbure de tungstène en deux étapes.

Cet exemple illustre la fabrication de carbure de tungstène à partir de l'oxyde $WO_3$ dopé avec de la soude.

On part dans ce cas de l'oxyde de tungstène dopé à la soude, de formule générale $(WO_3)_x(NaOH)_{1-x}$. Dans l'expérience objet de l'exemple, l'oxyde de tungstène dopé contenait 90 % de $WO_3$ et 10 % de NaOH en poids.

Dans une première étape, l'oxyde dopé mélangé au charbon actif dégazé dans les conditions de l'exemple 1 est sublimé et se dépose sur le charbon actif qui le réduit partiellement en sous-oxyde $WO_2$. Pour réaliser cette première étape, le four est réglé à 1400°C, son angle d'inclinaison et sa vitesse de rotation sont réglés de telle sorte que le temps de séjour des produits dans le four soit de 2 heures. Le four est mis sous balayage d'argon à un débit de 50 litres/heure. Les poudres de $WO_3$ dopé et de charbon actif mélangées dans des proportions stoechiométriques sont introduites en continu dans le four. On recueille à la sortie, après refroidissement, une poudre homogène et parfaitement stable constituée de charbon actif recouvert de sous-oxyde $WO_2$

Dans la deuxième étape, le produit intermédiaire composé de $WO_2$ et de charbon actif est réduit complètement et carburé. Pour réaliser cette deuxième étape, le four est réglé à 1400°C, son angle d'inclinaison et sa vitesse de rotation sont réglés de telle sorte que le temps de séjour du produit dans le four soit de 4 heures. Le four est mis sous balayage d'argon à un débit de 50 litres/heure. Le produit intermédiaire composé de $WO_2$ et de charbon actif est introduit en continu dans le four. On recueille à la sortie, après refroidissement, environ 50 g/h d'une poudre composée de 78 % de carbure de tungstène WC et de 22 % de charbon actif n'ayant pas réagi. Sa teneur en tungstène métal est sensiblement nulle. Cette poudre a une surface BET de 110 $m^2$/g et la dimension moyenne des cristallites est de 430 angströms.

Exemple 3: Fabrication de carbure de silicium sous balayage d'argon.

Dans cet exemple, on utilise le dispositif schématisé sur la figure 2. La partie centrale est constituée de 12 g de granulés de poudre de charbon actif agglomérée puis dégazée sous vide dans les conditions de l'exemple 1, la partie latérale de 44 g d'un mélange intime de poudre de silice et de poudre de silicium en quantités stoechiométriques: 31,8 % de Si et 68,2 % de $SiO_2$. On fait passer dans la partie centrale un courant d'argon à raison de 20 litres/heure. On monte la température à 1400°C et on la maintient pendant 5 heures. On refroidit, toujours sous balayage d'argon. Le produit obtenu est constitué de 87 % de carbure de silicium et de 13 % de carbone résiduel. La taille des cristallites est de 240 angströms en moyenne. On procède à un traitement d'oxydation pour éliminer le carbone résiduel. La surface BET est de 38 $m^2$/g avant ce traitement et de 20 $m^2$/g après traitement.

**Revendications**

1. Procédé de fabrication de carbures métalliques à surface spécifique élevée caractérisé en ce qu'il comprend les étapes suivantes:

   - mettre en contact dans un réacteur un mélange réactif constitué d'une part du carbone dont la surface spécifique est au moins égale à 200 $m^2$/g, d'autre part un composé, volatil dans les conditions de la réaction, du métal dont on fabrique le carbure, dans des proportions voisines de la stoechiométrie;

   - balayer ce mélange réactif par un courant de gaz inerte;

- porter le mélange réactif toujours sous balayage de gaz inerte à une température comprise entre 900 et 1400°C pendant un temps suffisant pour réduire le composé métallique volatil par le carbone et finalement carburer le produit réduit;

- refroidir le carbure obtenu, toujours en présence de gaz inerte, jusqu'à une température telle qu'il ne s'oxyde plus au contact de l'air;

- extraire le carbure du réacteur.

2. Procédé continu de fabrication de carbures métalliques à surface spécifique élevée caractérisé en ce qu'il comprend les étapes suivantes:

- introduire dans un réacteur continu un mélange réactif constitué d'une part du carbone dont la surface spécifique est au moins égale à 200 $m^2/g$, d'autre part un composé, volatil dans les conditions de la réaction, du métal dont on fabrique le carbure, dans des proportions voisines de la stoechiométrie;

- balayer le réacteur par un courant de gaz inerte introduit du côté de l'entrée du mélange réactif et extrait du côté de la sortie du carbure obtenu;

- faire passer le mélange réactif dans une première zone chauffée à une température comprise entre 900 et 1400°C pendant un temps suffisant pour volatiliser le composé métallique, le réduire par le carbone et finalement carburer le produit réduit;

- faire passer le mélange réactif dans une deuxième zone où le carbure obtenu, toujours en présence de gaz inerte, est refroidi jusqu'à une température telle qu'il ne s'oxyde plus au contact de l'air;

- extraire le carbure du réacteur.

3. Procédé continu de fabrication de carbures métalliques à surface spécifique élevée selon la revendication 2, caractérisé en ce que l'on mesure en continu ou à intervalles réguliers la teneur en CO du gaz inerte à la sortie du réacteur, que l'on compare cette valeur à un intervalle de consigne et que l'on modifie les paramètres opératoires pour ramener la teneur en CO à l'intérieur de cet intervalle en agissant sur le débit de gaz inerte que l'on augmente ou diminue si la teneur en CO augmente ou diminue ou sur la température de réaction que l'on diminue si la teneur en CO augmente.

4. Procédé de fabrication de carbures métalliques à surface spécifique élevée selon l'une des revendications 1 à 3 caractérisé en ce que le carbone utilisé est du charbon actif.

5. Procédé de fabrication de carbures métalliques à surface spécifique élevée selon la revendication 4 caractérisé en ce que le charbon actif a été, au préalable, dégazé par un traitement sous vide ou sous balayage d'un gaz inerte tel l'argon à une température comprise entre 1000 et 1200°C pendant une durée de 0,5 à 2 heures.

6. Procédé de fabrication de carbures métalliques à surface spécifique élevée selon la revendication 4 caractérisé en ce que le charbon actif est, au préalable, dopé par des sels de Ce, U, Ti, Zr, Hf, lanthanides.

7. Procédé de fabrication de carbures métalliques à surface spécifique élevée selon l'une des revendications 1 à 6 caractérisé en ce que le carbone utilisé est constitué de poudre de carbone agglomérée.

8. Procédé de fabrication de carbures métalliques à surface spécifique élevée selon l'une des revendications 1 à 7 caractérisé en ce que le métal appartient au groupe formé par le silicium, les métaux de transition, (groupes 3b, 4b, 5b, 6b, 7b, 8 des séries 4, 5, 6 de la classification des éléments), les métaux des terres rares et les actinides.

9. Procédé de fabrication de carbures métalliques à surface spécifique élevée selon la revendication 8 caractérisé en ce que le métal appartient au groupe formé par Mo, W, Re, V, Nb, Ta, Ti, Cr, Ni.

10. Procédé de fabrication de carbures métalliques à surface spécifique élevée selon l'une des revendications 1 à 9 caractérisé en ce que le composé métallique est un oxyde.

**11.** Procédé de fabrication de carbures métalliques à surface spécifique élevée selon l'une des revendications 1 à 10 caractérisé en ce que l'on introduit dans le réacteur un mélange aggloméré de poudre de carbone et du composé métallique.

**12.** Procédé de fabrication de carbures métalliques à surface spécifique élevée selon l'une des revendications 2 à 11 caractérisé en ce que le réacteur est un four cylindrique d'axe légèrement incliné sur l'horizontale tournant autour de son axe.

**13.** Procédé de fabrication de carbures métalliques à surface spécifique élevée selon l'une des revendications 2 à 11 caractérisé en ce que le réacteur est un four à passage.

**14.** Procédé de fabrication de carbures métalliques à surface spécifique élevée selon l'une des revendications 2 à 11 caractérisé en ce que le réacteur est un four en lit fuidisé.

**15.** Procédé de fabrication de carbures métalliques à surface spécifique élevée selon l'une des revendications 2 à 11 caractérisé en ce que le réacteur est un four croulant.

**16.** Procédé de fabrication de carbure à surface spécifique élevée d'un métal pour lequel il existe un oxyde ou un oxyde dopé qui se sublime suffisamment rapidement entre 800 et 1400°C selon l'une des revendications 2 à 5, caractérisé en ce qu'il comprend les étapes suivantes:

- introduire dans un premier four tournant balayé par un courant de gaz inerte un mélange réactif constitué d'une part du carbone dont la surface spécifique est au moins égale à 200 $m^2$/g, d'autre part de l'oxyde ou de l'oxyde dopé;

- faire passer le mélange réactif dans le premier four tournant chauffé à une température comprise entre 800 et 1400°C pendant un temps suffisant pour volatiliser l'oxyde ou ou l'oxyde dopé, le réduire partiellement en sous-oxyde qui se dépose sur le carbone, refroidir et extraire le produit intermédiaire ainsi obtenu;

- faire passer le mélange réactif dans un deuxième four tournant chauffé à une température comprise entre 900 et 1400°C pendant un temps suffisant pour réduire complètement le sous-oxyde et le carburer;

- faire passer le carbure ainsi obtenu dans une zone de refroidissement, toujours sous balayage de gaz inerte, jusqu'à une température telle qu'il ne s'oxyde plus au contact de l'air;

- extraire le carbure de la zone de refroidissement.

**17.** Procédé de fabrication de carbure à surface spécifique élevée selon la revendication 16, caractérisé en ce que l'oxyde se sublimant rapidement entre 800 et 1400°C est l'oxyde de molybdène $MoO_3$

**18.** Procédé de fabrication de carbure à surface spécifique élevée selon la revendication 16, caractérisé en ce que l'oxyde dopé se sublimant rapidement entre 800 et 1400°C est l'oxyde de tungstène dopé par la soude ou la potasse, de formule $(WO_3)_x(NaOH)_{1-x}$ ou $(WO_3)_x(KOH)_{1-x}$.

**19.** Procédé de fabrication de carbure de silicium à surface spécifique élevée selon l'une des revendication 1 à 5, , caractérisé en ce qu'il comprend les étapes suivantes:

- utiliser un réacteur comportant une enveloppe extérieure présentant, à l'entrée et à la sortie des réductions de section;

- remplir la partie centrale du réacteur de carbone à grande surface spécifique, du charbon actif par exemple et sa partie latérale d'un mélange de silice et de silicium;

- introduire un gaz inerte, tel l'argon pour balayer en

- introduire un gaz inerte, tel l'argon pour balayer en permanence le réacteur, de telle sorte que la majeure partie du courant gazeux traverse uniquement le carbone;

- porter le réacteur à une température comprise entre 900 et 1400°C de façon à réduire le silicium par la silice en formant du SiO dans la partie latérale et à réduire et carburer le SiO formé au contact du carbone dans la partie centrale tandis que l'oxyde de carbone formé est éliminé par le courant de gaz inerte circulant dans la partie centrale;

- refroidir le carbure obtenu, toujours en présence de gaz inerte, jusqu'à une température telle qu'il ne s'oxyde plus au contact de l'air;

- extraire le carbure du réacteur.

**Claims**

1. A process for the production of metal carbides with a large specific surface, characterised in that it comprises the following stages:

   - contacting in a reactor a reactive mixture constituted, on the one hand, by carbon whose specific surface is at least equal to 200 m$^2$/g, and, on the other hand, by a compound which is volatile under the reaction conditions, of the metal whose carbide is to be produced, in proportions close to stoichiometry;

   - scavenging said reactive mixture using an inert gas flow;

   - bringing the reactive mixture, still with inert gas scavenging, to a temperature of between 900 and 1400°C for a period of time which is sufficient to reduce the volatile metal compound by carbon and finally to carburize the reduced product;

   - cooling the carbide obtained, still in the presence of inert gas, to a temperature such that it no longer oxidises in contact with air;

   - extracting the carbide from the reactor.

2. A continuous process for the production of metal carbides with a large specific surface. characterised in that it comprises the following stages:

   - introducing into a continuous reactor a reactive mixture which is constituted, on the one hand, by carbon with a specific surface which is at least equal to 200 m$^2$/g. and, on the other hand, by a compound, which is volatile under the reaction conditions of the metal whose carbide is to be produced, in proportions close to stoichiometry;

   - scavenging the reactor with a flow of inert gas which is introduced at the side of the intake for the reactive mixture and which is removed at the side of the outlet for the carbide obtained;

   - passing the reactive mixture into a first zone which is heated to a temperature of between 900 and 1400°C for a period of time sufficient to volatilize the metal compound, to reduce it with carbon, and finally carburise the reduced product;

   - passing the reactive mixture into a second zone where the carbide which has been obtained and which is still in the presence of inert gas is cooled to a temperature such that it no longer oxides in contact with air;

   - extracting the carbide from the reactor.

3. A continuous process for the production of metal carbides with a large specific surface according to Claim 2, characterised in that the content of CO in the inert gas at the outlet from the reactor is measured continuously, or at regular intervals, and that value is compared to a reference range, and the operating parameters are modified in order to bring the CO content within that range by acting on the inert gas flow which is increased or reduced if the content of CO increases or decreases, or by acting on the reaction temperature which is reduced if the CO content increases.

4. A process for the production of metal carbides with a large specific surface according to one of Claims 1 to 3, characterised in that the carbon used is active carbon.

**EP 0 543 751 B1**

5. A process for the production of metal carbides with a large specific surface according to Claim 4, characterised in that the active carbon has been degassed beforehand by way of a vacuum treatment or by the scavenging of an inert gas such as argon at a temperature of between 1000 and 1200°C for a period of between 0.5 and 2 hours.

6. A process for the production of metal carbides with a large specific surface according to Claim 4, characterised in that the active carbon has been doped beforehand by Ce, U, Ti, Zr, Hf salts, lanthanides.

7. A process for the production of metal carbides with a large specific surface according to one of Claims 1 to 6, characterised in that the carbon used is constituted by agglomerated carbon powder.

8. A process for the production of metal carbides with a large specific surface according to one of Claims 1 to 7, characterised in that the metal belongs to the group formed by silicon, transition metals (groups 3b, 4b, 5b, 6b, 7b, 8 of series 4, 5, 6 of the classification of elements), the metals of rare earths and actinides.

9. A process for the production of metal carbides with a large specific surface according to Claim 8, characterised in that the metal belongs to the group formed by Mo, W, Re, V, Nb, Ta, Ti, Cr, Ni.

10. A process for the production of metal carbides with a large specific surface according to one of Claims 1 to 9, characterised in that the metal compound is an oxide.

11. A process for the production of metal carbides with a large specific surface according to one of Claims 1 to 10, characterised in that introduced into the reactor is an agglomerated mixture of carbon powder and of metal compound.

12. A process for the production of metal carbides with a large specific surface according to one of Claims 2 to 11, characterised in that the reactor is a cylindrical furnace, whose axis is slightly inclined with respect to the horizontal rotating about its axis.

13. A process for the production of metal carbides with a large specific surface according to one of Claims 2 to 11, characterised in that the reactor is a passage furnace.

14. A process for the production of metal carbides with a large specific surface according to one of Claims 2 to 11, characterised in that the reactor is a fluidised bed furnace.

15. A process for the production of metal carbides with a large specific surface according to one of Claims 2 to 11, characterised in that the reactor is a sinking furnace.

16. A process for the production of carbide with a large specific surface of a metal for which an oxide exists or a doped oxide which sublimes at a sufficient speed at between 800 and 1400°C according to one of Claims 2 to 5, characterised in that it comprises the following stages:

    -   introducing into a first rotary furnace which is scavenged by a flow of inert gas a reactive mixture which is constituted by carbon, on the one hand, the specific surface of which is at least equal to 200 $m^2$/g, and of oxide or doped oxide, on the other hand;

    -   passing the reactive mixture into the first rotary furnace which is heated to a temperature of between 800 and 1400°C for a period of time sufficient to volatilize the oxide or doped oxide, to partially reduce it to suboxide which is deposited on the carbon, followed by, cooling and extraction of the intermediate product thus obtained;

    -   passing the reactive mixture into a second rotary furnace which has been heated to a temperature of between 900 and 1400°C for a period of time which is sufficient to completely reduce tie sub-oxide and to carburize it;

    -   passing the carbide thus obtained into a cooling zone, whilst still scavenging inert gas, to a temperature which is such that it no longer oxidises in contact with air;

    -   extracting the carbide from the cooling zone.

17. A process for the production of carbide with a large specific surface according to Claim 16, characterised in that the oxide which sublimes rapidly at between 800 and 1400°C is molybdenum oxide $MoO_3$.

13

18. A process for the production of carbide with a large specific surface according to Claim 16, characterised in that the doped oxide which sublimes rapidly at between 800 and 1400°C is tungsten oxide which is doped by' soda or potash of formula $(WO_3)_x(NaOH)_{1-x}$ or $(WO_3)_x(KOH)_{1-x}$.

19. A process for the production of silicon carbide with a large specific surface according to one of Claims 1 to 5, characterised in that it comprises the following steps:

- using a reactor which comprises an outer envelope with reduced cross-sections at the intake and outlet;

- filling the central part of [he reactor with carbon which has a large specific surface, e.g. with active carbon, and its lateral part with a mixture of silica and silicon;

- introducing an inert gas, such as argon in order to permanently scavenge the reactor, in such a way that most of the gas flow solely traverses the carbon;

- bringing the reactor to a temperature of between 900 and 1400°C in such a way as to reduce the silicon with silica by forming SiO in the lateral part, and in such a way as to reduce and carburise the SiO formed in contact with the carbon in the central part, whereas the carbon oxide formed is removed by the inert gas flow which circulates in the central part;

- cooling the carbide obtained which is still in the presence of inert gas to a temperature such that it no longer oxides in contact with air;

- removing the carbide from the reactor.

**Patentansprüche**

1. Verfahren zur Herstellung von Metallkarbiden hoher spezifischer Oberfläche, dadurch gekennzeichnet, daß es die folgenden Schritte aufweist:

- Kontaktieren eines Reaktionsgemisches in einem Reaktor, das einerseits aus Kohlenstoff, dessen spezifische Oberfläche wenigstens gleich 200 $m^2$/g ist, und andererseits aus einer unter den Bedingungen der Reaktion flüchtigen Verbindung des Metalls, dessen Karbid man herstellt, in der Stöchiometrie nahen Anteilen gebildet wird;

- Spülen dieses Reaktionsgemisches mit einem Strom inerten Gases;

- Bringen des Reaktionsgemisches unter stetigem Spülen mit inertem Gas auf eine Temperatur im Bereich von 900 bis 1400 °C während einer ausreichenden Zeit zum Reduzieren der flüchtigen Metallverbindung durch den Kohlenstoff und zum schließlichen Karburieren des Reduktionsprodukts;

- Abkühlen des erhaltenen Karbids unter stetiger Anwesenheit inerten Gases bis zu einer solchen Temperatur, daß es im Kontakt mit Luft nicht mehr oxidiert wird;

- Entnahme des Karbids aus dem Reaktor.

2. Kontinuierliches Verfahren zur Herstellung von Metallkarbiden hoher spezifischer Oberfläche, dadurch gekennzeichnet, daß es die folgenden Schritte aufweist:

- Einführen eines Reaktionsgemisches in einen Durchlaufreaktor, das einerseits aus Kohlenstoff, dessen spezifische Oberfläche wenigstens gleich 200 $m^2$/g ist, und andererseits aus einer unter den Bedingungen der Reaktion flüchtigen Verbindung des Metalls, dessen Karbid man herstellt, in der Stöchiometrie nahen Anteilen gebildet wird;

- Spülen des Reaktors mit einem an der Seite des Eintritts des Reaktionsgemisches eingeführten und an der Seite des Ausgangs des erhaltenen Karbids abgezogenen Strom inerten Gases;

- Fördern des Reaktionsgemisches in eine erste, auf eine Temperatur im Bereich von 900 bis 1400 °C erhitzte Zone während einer ausreichenden Zeit zum Verflüchtigen der Metallverbindung, zu deren Reduktion durch den Kohlenstoff und zum schließlichen Karburieren des Reduktionsprodukts;

- Fördern des Reaktionsgemisches in eine zweite Zone, wo das erhaltene Karbid unter stetiger Anwesenheit inerten Gases bis zu einer solchen Temperatur abgekühlt wird, daß es im Kontakt mit Luft nicht mehr oxidiert wird;

- Entnahme des Karbids aus dem Reaktor.

3. Kontinuierliches Verfahren zur Herstellung von Metallkarbiden hoher spezifischer Oberfläche nach dem Anspruch 2, dadurch gekennzeichnet, daß man ständig oder in regelmäßigen Zeitabständen den CO-Gehalt des inerten Gases mißt, daß man diesen Wert mit einem Sollwertbereich vergleicht und daß man die Arbeitsparameter zum Rückführen des CO-Gehalts in diesen Bereich verändert, indem man auf den Durchsatz inerten Gases, den man erhöht oder senkt, wenn der CO-Gehalt wächst oder abnimmt, oder auf die Reaktionstemperatur einwirkt, die man verringert, wenn der CO-Gehalt wächst.

4. Verfahren zur Herstellung von Metallkarbiden hoher spezifischer Oberfläche nach einem der Ansprüche 1 bis 3, dadurch gekennzeichnet, daß der verwendete Kohlenstoff Aktivkohle ist.

5. Verfahren zur Herstellung von Metallkarbiden hoher spezifischer Oberfläche nach dem Anspruch 4, dadurch gekennzeichnet, daß die Aktivkohle vorab durch Behandlung unter Vakuum oder unter Spülen mit einem inerten Gas wie Argon bei einer Temperatur im Bereich von 1000 bis 1200 °C während einer Dauer von 0,5 bis 2 Stunden entgast wurde.

6. Verfahren zur Herstellung von Metallkarbiden hoher spezifischer Oberfläche nach dem Anspruch 4, dadurch gekennzeichnet, daß die Aktivkohle vorab mit Salzen von Ce, U, Ti, Zr, Hf, Lanthaniden dotiert wird.

7. Verfahren zur Herstellung von Metallkarbiden hoher spezifischer Oberfläche nach einem der Ansprüche 1 bis 6, dadurch gekennzeichnet, daß der verwendete Kohlenstoff aus agglomeriertem Kohlenstoffpulver besteht.

8. Verfahren zur Herstellung von Metallkarbiden hoher spezifischer Oberfläche nach einem der Ansprüche 1 bis 7, dadurch gekennzeichnet, daß das Metall zur Gruppe gehört, die durch Silizium, die Übergangsmetalle (Gruppen 3b, 4b, 5b, 6b, 7b, 8 der Perioden 4, 5, 6 der Klassifizierung der Elemente), die Seltenerdmetalle und die Actiniden gebildet wird.

9. Verfahren zur Herstellung von Metallkarbiden hoher spezifischer Oberfläche nach dem Anspruch 8, dadurch gekennzeichnet, daß das Metall zu der aus Mo, W, Re, V, Nb, Ta, Ti, Cr und Ni gebildeten Gruppe gehört.

10. Verfahren zur Herstellung von Metallkarbiden hoher spezifischer Oberfläche nach einem der Ansprüche 1 bis 9, dadurch gekennzeichnet, daß die Metallverbindung ein Oxid ist.

11. Verfahren zur Herstellung von Metallkarbiden hoher spezifischer Oberfläche nach einem der Ansprüche 1 bis 10, dadurch gekennzeichnet, daß man in den Reaktor ein agglomeriertes Gemisch von Kohlenstoffpulver und der Metallverbindung einführt.

12. Verfahren zur Herstellung von Metallkarbiden hoher spezifischer Oberfläche nach einem der Ansprüche 2 bis 11, dadurch gekennzeichnet, daß der Reaktor ein zylindrischer Ofen mit einer leicht zur Horizontalen geneigten Achse ist, der sich um seine Achse dreht.

13. Verfahren zur Herstellung von Metallkarbiden hoher spezifischer Oberfläche nach einem der Ansprüche 2 bis 11, dadurch gekennzeichnet, daß der Reaktor ein Durchlaufofen ist.

14. Verfahren zur Herstellung von Metallkarbiden hoher spezifischer Oberfläche nach einem der Ansprüche 2 bis 11, dadurch gekennzeichnet, daß der Reaktor ein Ofen mit Wirbelschicht ist.

15. Verfahren zur Herstellung von Metallkarbiden hoher spezifischer Oberfläche nach einem der Ansprüche 2 bis 11, dadurch gekennzeichnet, daß der Reaktor ein Niedergangsofen ist.

**16.** Verfahren zur Herstellung eines Karbids hoher spezifischer Oberfläche eines Metalls, für das ein Oxid oder ein dotiertes Oxid existiert, das ausreichend rasch zwischen 800 und 1400 °C sublimiert, nach einem der Ansprüche 2 bis 5, dadurch gekennzeichnet, daß es die folgenden Schritte aufweist:

- Einführen eines Reaktionsgemisches, das einerseits aus Kohlenstoff, dessen spezifische Oberfläche wenigstens 200 m²/g ist, und andererseits aus dem Oxid oder dem dotierten Oxid besteht, in einen ersten, mit einem Strom inerten Gases gespülten Drehofen;

- Fördern des Reaktionsgemisches im ersten, auf eine Temperatur im Bereich von 800 bis 1400 °C erhitzten Drehofen während einer ausreichenden Zeit zum Verflüchtigen des Oxids oder des dotierten Oxids, dessen teilweise Reduktion zum Suboxid, das sich auf dem Kohlenstoff abscheidet, Abkühlung und Entnahme des so erhaltenen Zwischenprodukts;

- Fördern des Reaktionsgemisches in einen zweiten, auf eine Temperatur im Bereich von 900 bis 1400 °C geheizten Drehofen während einer ausreichenden Zeit zur vollständigen Reduktion des Suboxids und zum Karburieren;

- Fördern des so erhaltenen Karbids in eine Zone zum Abkühlen unter stetigem Spülen mit inertem Gas bis zu einer solchen Temperatur, daß es im Kontakt mit Luft nicht mehr oxidiert wird;

- Entnahme des Karbids aus der Abkühlungszone.

**17.** Verfahren zur Herstellung eines Karbids hoher spezifischer Oberfläche nach dem Anspruch 16, dadurch gekennzeichnet, daß das zwischen 800 und 1400 °C rasch sublimierende Oxid das Molybdänoxid $MoO_3$ ist.

**18.** Verfahren zur Herstellung eines Karbids hoher spezifischer Oberfläche nach dem Anspruch 16, dadurch gekennzeichnet, daß das zwischen 800 und 1400 °C rasch sublimierende dotierte Oxid mit Natriumhydroxid oder Kaliumhydroxid dotiertes Wolframoxid der Formel $(WO_3)_x(NaOH)_{1-x}$ oder $(WO_3)_x(KOH)_{1-x}$ ist.

**19.** Verfahren zur Herstellung von Siliziumkarbid hoher spezifischer Oberfläche nach einem der Ansprüche 1 bis 5, dadurch gekennzeichnet, daß es die folgenden Schritte aufweist:

- Verwendung eines Reaktors mit einer äußeren Hülle, die am Eingang und am Ausgang Querschnittsverminderungen aufweist;

- Füllen des mittleren Teils des Reaktors mit Kohlenstoff großer spezifischer Oberfläche, beispielsweise mit Aktivkohle, und seines seitlichen Teils mit einem Gemisch von Siliziumdioxid und Silizium;

- Einführen eines inerten Gases, wie z.B. Argon, zum dauernden Spülen des Reaktors derart, daß der größere Teil des Gasstroms nur den Kohlenstoff durchsetzt;

- Bringen des Reaktors auf eine Temperatur im Bereich von 900 bis 1400 °C derart, um das Silizium durch das Siliziumoxid unter Bildung von SiO im seitlichen Teil zu reduzieren und das gebildete SiO im Kontakt mit dem Kohlenstoff im mittleren Teil zu reduzieren und zu karburieren, während das gebildete Kohlenoxid durch den im mittleren Teil zirkulierenden Inertgasstrom beseitigt wird;

- Abkühlen des erhaltenen Karbids unter stetiger Anwesenheit inerten Gases bis zu einer solchen Temperatur, daß es im Kontakt mit Luft nicht mehr oxidiert wird;

- Entnahme des Karbids aus dem Reaktor.

Fig. 1

Fig 2